(19) Europäisches Patentamt

European Patent Office

Office européen des brevets

(11) **EP 4 761 097 A1**

(12) **EUROPEAN PATENT APPLICATION**

(43) Date of publication:
**17.06.2026 Bulletin 2026/25**

(21) Application number: **24219861.2**

(22) Date of filing: **13.12.2024**

(51) International Patent Classification (IPC):
**H02P 3/22** (2006.01)   **H02P 21/36** (2016.01)

(52) Cooperative Patent Classification (CPC):
**H02P 3/22; H02P 21/36**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **STENBRATT, Ulf**
**434 94 VALLDA (SE)**
• **LAINE, Leo**
**414 84 GÖTEBORG (SE)**
• **LINDBERG, Johan**
**415 24 GÖTEBORG (SE)**
• **NILSSON, Kristoffer**
**227 31 LUND (SE)**

(74) Representative: **Kransell & Wennborg KB**
**P.O. Box 2096**
**403 12 Göteborg (SE)**

Remarks:
Amended claims in accordance with Rule 137(2) EPC.

(54) **ELECTRIC MACHINE WITH IMPROVED BRAKE CONTROL**

(57)     A controller (100) for controlling an electric machine (610) used to propel and/or brake an electric vehicle 600. The controller is configured to obtain an indication (110) of a desire to use the electric machine to brake the vehicle and, in response to obtaining the indication, and as part of controlling the electric machine, intentionally increase core magnetization losses in the electric machine. Provided is also a laminated stator and/or rotor for an electric machine, wherein an insulation material of the stator and/or rotor is selected to have an electric conductivity that increases with frequency. A corresponding vehicle, method, computer program (product) and computer-readable storage medium are also provided.

Fig. 1A

Fig. 1B

**Description**

**TECHNICAL FIELD**

The disclosure relates generally to the field of electric vehicles. In particular aspects, the disclosure relates to brake control for an electric machine used to propel such a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

An electric vehicle, such as for example an electric truck, car or similar, is propelled using one or more electric machines, such as one or more electric motors. In addition to providing propulsive power, an electric motor can also be used as a generator to brake the vehicle. Such braking, commonly referred to as *regenerative braking*, has the benefit that at least part of the kinetic energy of the vehicle may be recuperated and used to recharge the vehicle's battery pack(s), thereby reducing average energy consumption and extending the possible range of the vehicle. In addition, especially for heavier vehicles such as trucks, trains, and similar, regenerative braking also has the benefit that it at least partially offloads the service brakes and reduces the risk of the service brakes overheating and fading.

For regenerative braking to work as expected, however, the battery pack must be able to receive energy, e.g. the battery pack cannot be fully charged. This may become an issue for vehicles that have recently started driving after being fully charged, for vehicles that have been driving on downhill slopes for an extended period of time, and similar, as charging of the battery pack(s) reduces the effect of regenerative braking as the state-of-charge (SoC) of the battery pack(s) increases.

The present disclosure aims at providing a solution that at least partially overcome one or more of the above-mentioned issues with contemporary technology.

**SUMMARY**

According to a first aspect of the disclosure, there is provided a controller for an electric machine used (e.g. configured) to propel and/or brake an electric vehicle. The controller is configured to obtain an indication of a desire (e.g., as indicated by a received command/instruction) to use the electric machine to brake the vehicle. The controller is further configured to, in response to obtaining the indication, and as part of controlling the electric machine, intentionally increase core magnetization losses in the electric machine. The first aspect may seek to solve the problem of how to brake an electric vehicle using an electric machine. A technical benefit may include that by increasing the core magnetization losses in the electric machine, the electric machine may provide braking power even if e.g. a battery pack used to power the electric machine is full or almost full. The excess braking energy is then dissipated as heat. Core magnetization losses may for example be due to hysteresis, eddy currents, or both. The proposed controller thereby enables to both accelerate and brake the vehicle, to charge the battery pack(s) of the vehicle if possible, and more importantly to also provide braking of the vehicle even when the battery pack is fully charged. As used herein, the core magnetization losses of the electrical machine are controllable, and may be influenced based on how the control scheme used to control the electric machine is altered/configured. As used herein, that the core magnetization losses are intentionally increased means that the control scheme is, on purpose, altered to cause such an increase.

Optionally, in some examples, including in at least one preferred example, the controller may be configured to increase the core magnetization losses by adding a direct current (DC) current offset to AC current requests used to control the electric machine, e.g. as part of a control system scheme. A technical benefit may include that such a DC current offset gives rise to hysteresis sub-loops that increases the magnetization losses in the core of the electric machine.

Optionally, in some examples, including in at least one preferred example, the controller may be configured to add the DC current after first decomposing it (i.e. the DC current offset) into additional active and reactive components (for example in a direct-quadrature(-zero), DQ-, frame). A technical benefit may include that the increased core magnetization losses may thus be obtained by modifying an already existing control system scheme for the electric machine. For example, Givens rotations or any other suitable decomposition technique may be used for such decomposing.

Optionally, in some examples, including in at least one preferred example, the controller may be configured to increase the core magnetization losses by inserting one or more harmonic voltage components in at least one of a reference voltage and a modulation scheme for the electric machine. A technical benefit may include that higher-frequency content of the core may thus be provided, leading to the desired increase of core magnetization losses.

Optionally, in some examples, including in at least one preferred example, the controller may be configured to increase the core magnetization losses by modifying a modulation scheme for the electric machine, including at least one of reducing a carrier frequency for the modulation scheme and selecting another, different modulation scheme (that increases higher-frequency content of the electric machine). A technical benefit may include that e.g. reduction of carrier frequency introduces a number of harmonics, and leads to higher-frequency content of the electric machine as desired.

Generally, all methods of increasing the core magnetization losses as presented herein have the technical benefit that they can be implemented by modifying an already existing control system scheme for the electric machine, i.e. such that a main torque control can remain active and be minimally impacted by the proposed additions.

Optionally, in some examples, including in at least one preferred example, the controller may be implemented by processing circuitry of a computer system. A technical benefit may include that a computer, microcomputer, field-programmable gate-array (FPGA), or similar, may thus be used to at least partially implement the controller, as an alternative to implementing the controller without any computer (e.g. by discrete components, application-specific circuits, or similar, that do not need to be programmed). Of course, implementing the controller without a computer is however also envisaged by the present disclosure.

According to a second aspect of the present disclosure, there is provided an electric machine for propelling an electric vehicle. The electric machine includes a laminated stator (e.g., a laminated steel stator) and/or rotor. An insulation material provided between the laminations of the stator and/or rotor is selected to have an (electrical) conductivity that increases with frequency. Phrased differently, the insulation material has a frequency-dependent electrical conductivity, such that the conductivity increases when the frequency increases. The second aspect may seek to solve the problem of how to provide an electrical machine that is capable of braking an electric vehicle, and that is less dependent on whether the battery pack(s) configured to power the electric machine are fully charged or not. A technical benefit may include that the increased conductivity with higher frequency increases coupling between the (steel) laminations, leading to higher (eddy-current) magnetization losses and thereby improves the braking capability of the electric machine. In particular, the envisaged electric machine is suitable for use together with the controller of the first aspect (or any example thereof), as the electric machine and the frequency-dependent lamination material further improves the wanted effects of the increased frequency content provided by the controller.

Optionally, in some examples, including in at least one preferred example, the electric machine may be an induction, such as e.g. an asynchronous induction motor. A technical benefit may include that such a motor may be particularly suitable for propelling an electric vehicle, due to e.g. requiring no electrical connections to the rotor, being able to run smoothly without demagnetization even under longer-term high-power and/or high-temperature operations, and similar.

Optionally, in some examples, including in at least one preferred example, the insulation material may be (or at least include) polyvinylidene fluoride (PVDF). A technical benefit may include that such a material has an electrical conductivity that increases with frequency, has high chemical resistance, high mechanical strength, good processability, high tensile strength, and similar.

Optionally, in some examples, including in at least one preferred example, the insulation material may be (or at least include) polyimide, often referred to as "Kapton". A technical benefit may include that such a material has an electrical conductivity that increase with frequency, has good fire, chemical and solvent resistance, has low coefficient of friction, and similar.

Optionally, in some examples, including in at least one preferred example, the insulation material may be (or at least include) graphene, such as three-dimensional graphene. A technical benefit may include that such a material has an electrical conductivity that increase with frequency, has good mechanical and thermal properties, and similar. As also envisaged herein, graphene may be combined with e.g. polyimide and/or PVDF and form part of the insulation material between the stator laminations.

According to a third aspect of the present disclosure, there is provided an electric vehicle. The vehicle includes the controller of the first aspect (or any example thereof described herein), and the electrical machine. The third aspect may seek to solve the problem of how to provide a vehicle whose braking capabilities are less dependent on whether its battery pack is fully charged or not. A technical benefit may include any of those already described above in relation to the first aspect.

Optionally, in some examples, including in at least one preferred example, the vehicle may be a heavy-duty vehicle or piece of heavy machinery. For example, the vehicle may be a truck, tractor, wheel loader, dump truck, hauler, train, or any other vehicle for which being able to brake the vehicle using an electric machine is desirable. A technical benefit may include any of those already described above in relation to the first aspect.

Optionally, in some examples, including in at least one preferred example, the electric machine of the electric vehicle may be the electric machine of the second aspect (or any example thereof described herein). A technical benefit may include any of those already described above in relation to the second aspect.

According to a fourth aspect of the present disclosure, there is provided a (computer-implemented) method for controlling an electric machine used to propel an electric vehicle. The method is performed by processing circuitry of a computer system, and the method includes obtaining the indication of the desire to use the electric machine to brake the vehicle and, in response to obtaining the indication, and as part of controlling the electric machine, intentionally increasing the core magnetization losses in the electric machine. The fourth aspect may seek to solve the problem of how to provide a method implementing the functionality of the controller of the first aspect, at least partially by using a computer/processor. A technical benefit may include that the controller may thus be reprogrammed as needed, without having to replace any circuit elements as would be the case if instead implementing the controller using only discreet circuit elements and/or non-programmable circuit elements.

According to a fifth aspect of the present disclosure, there is provided a computer program (product) that includes program code for performing, when executed by the processing circuitry, the method of the fourth aspect. The fifth aspect may seek to solve the problem of how to provide computer instructions for executing the method, with the same benefits thereof as already described herein.

According to a sixth aspect of the present disclosure, there is provided a computer-readable storage medium that includes instructions. The instructions are such that they, when executed by the processing circuitry, cause the processing circuitry to perform the method of the fourth aspect. The sixth aspect may seek to solve the problem of how to logistically distribute such instructions. In some examples, the computer-readable storage medium may be non-transitory.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIGS. 1A** and **1B** schematically illustrate various examples of a controller for controlling an electric machine as envisaged herein, according to various examples.

**FIG. 2** schematically illustrates a flowchart of various examples of a (computer-implemented) method for controlling an electric machine as envisaged herein, according to various examples.

**FIG. 3** schematically illustrates various examples of a control scheme for an electric machine, as implemented using a controller as envisaged herein, according to various examples.

**FIGS. 4A, 4B** and **4C** illustrates an example of a stator for an electric machine as envisaged herein, according to an example.

**FIG. 5** schematically illustrates an example plot of conductivity versus frequency of an insulation material for stator laminations as envisaged herein, according to an example.

**FIG. 6** schematically illustrates an example of an electric vehicle as envisaged herein, according to an example.

**FIG. 7** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

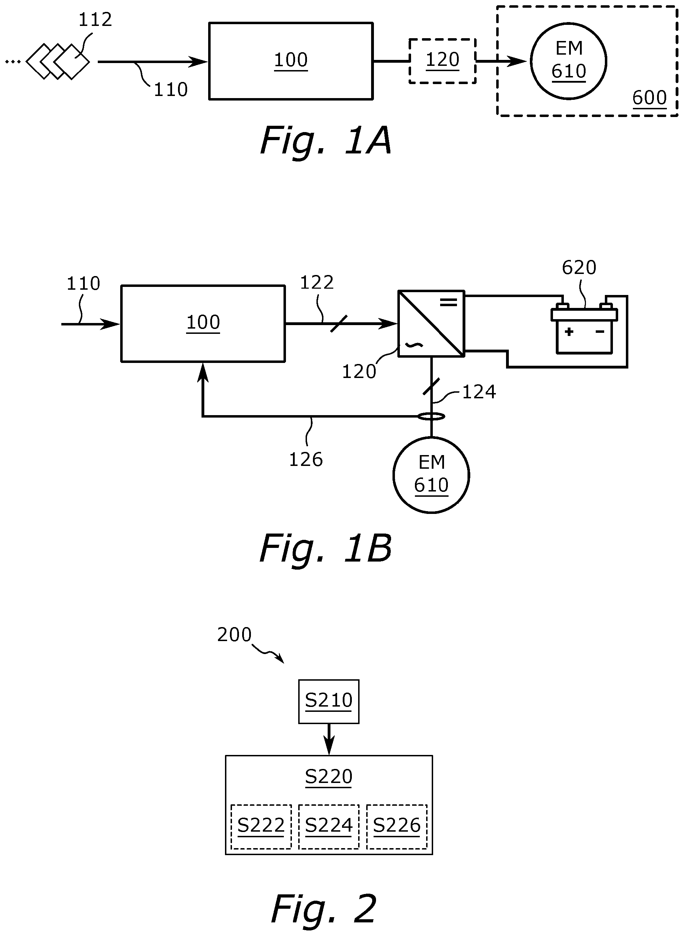

**FIG. 1A** schematically illustrates a controller 100 for controlling an electric machine 610, according to various examples. The electric machine 610 is used to provide propulsion for an electric vehicle 600, as will be further exemplified later herein. The electric machine 610 may for example be an (asynchronous) induction motor, or similar.

The control 100 is configured to obtain an indication 110 of a desire to use the electric machine 610 to brake the vehicle 600. For example, the indication 110 may be provided as part of an electric, electromagnetic and/or optic signal, and similar. The indication 110 may for example be communicated over a vehicle bus, such as e.g. a CAN bus, a LIN bus, or similar. In other examples, the indication 110 may be provided directly to the controller 100, e.g. via a wired or wireless connection. For example, the indication 110 may be provided from one or more other control entities 112 of the vehicle 600, such as for example an (adaptive) cruise control, an advanced driver assistance system (ADAS), from a controller responsible for driving the vehicle 600 autonomously, or from any other entity capable of providing such a signal/indication 110. The indication 110 may in other examples be provided by an operator (e.g. driver) of the vehicle 600, i.e. in response to the operator pressing a button, pulling a lever, selecting a particular option from a user display, and similar, within a cabin of the vehicle 600. In other examples, the indication 110 may be provided from a system responsible for handling of regenerative braking of the vehicle 600. For example, the indication 110 may be provided in response to the driver wholly or at least partially releasing an acceleration pedal of the vehicle 600, by whole or at least partially pressing a braking pedal of the vehicle 600, or by any other possible way. Phrased differently, for the present disclosure, exactly how and why the indication 110 is provided is not important, as long as the controller 100 is configured to receive the indication 110, i.e. by reading a signal, interpreting a message, and similar.

The controller 100 is further configured to, in response to obtaining (e.g. receiving) the indication 110 of the desire to use the electrical machine 610 to brake (e.g. to decelerate or maintain a speed of) the vehicle 600, intentionally increase core magnetization losses in the electric machine 610, as part of (normal) controlling of the electric machine 600 for which the controller 100 is responsible. Examples of how the controller 100 can cause such increased core magnetization losses will be provided later herein. The controller 100 may be configured to either control the electric machine 610 directly, or via one or more intermediate controllers/control systems 120 and similar.

**FIG. 1B** schematically illustrates one possible example of the workings of the controller 100 in more detail. Here, in this example, the controller 100 is responsible for providing one or more pulse width modulation (PWM) signals 122 to an inverter 120. The inverter is configured to convert DC power obtained from one or more battery packs 620 of the vehicle 600 into AC power, and deliver the AC power (e.g. via one or more electrical wires 124, and similar). For example, the inverter 120 may be configured to provide single- or three-phase AC power to the electric machine 610, depending of course on the exact configuration of the electric machine 610. The controller 100 may also be configured to receive one or more feedback signals 126, indicative of e.g. phase currents in the one or more wires 124, and similar, in order to improve control of the electric machine 610. As envisaged herein, the controller 100 is configured to implement a control scheme for an electric machine, such as any suitable conventional such scheme, but further to modify such a scheme in order to cause the increased core magnetization losses in the electric machine 610 in response to obtaining the indication 110.

**FIG. 2** schematically illustrates a flowchart of various examples of a method 200 for controlling the electric machine 610, as implemented/performed by the controller 100. As part of an operation S210 of the method 200, the controller 100 obtains the indication 110. As part of an operation S220 of the method 200, in response to obtaining the indication 110 and as part of controlling the electric machine 610, the controller intentionally causes (by altering the control scheme) the increased core magnetization losses in the electric machine 610. Each of the operations S210 and S220 may of course be altered as required, e.g. by one or more suboperations, in accordance with any example procedure for causing the increased core magnetization losses as described herein.

As envisaged herein, increasing the core magnetization losses in the electric machine 610, e.g. in a stator of the electric machine 610, the braking capability of the electric machine 610 is improved, as mechanical power from wheels and/or transmission of the electric vehicle 600 can be converted into heat, thus reducing the dependence on the one or more battery packs 620 of the vehicle 600 being sufficiently depleted for such regenerative braking to work as desired. Phrased differently, the present disclosure envisages to temporarily alter (i.e. increase) the core magnetization losses in the electric machine 610 when there is a need to use the electric machine 610 to brake the vehicle 600. When there is no such indicated need for braking, the controller 100 may return back to more conventional control. Consequently, the intentionally caused increase of core magnetization losses may be performed only when there is a need for braking, and not during normal operation of the electric machine 610 as when e.g. providing propulsive power to the vehicle 600 for propelling the vehicle 600 e.g. forward. For example, the envisaged modification of the control scheme in order to increase core magnetization losses may be activated only when the vehicle 600 is descending downhill, or in any other situation when there is a need to decelerate the vehicle 600 or e.g. maintaining the vehicle 600 at a constant speed (such as when going downhill). Once such a situation is over, the controller 100 may revert back to conventional control, and avoid intentionally causing such core magnetization losses. In addition, the solution as envisaged herein may be such that the intention 110 is relevant only when e.g. the one or more battery packs 620 of the vehicle 600 are fully (or close to being fully) charged. For example, the one or more entities 112 may be configured to signal the intention 110 to the controller 100 only when conventional regenerative braking is not available, due to the one or more battery packs 620 being sufficiently fully charged, or e.g. currently not working as expected for one or more other reasons (such as failure, overheating, being too cold to receive sufficient amounts of current generated by the electric machine 610, and similar). In other examples, the controller 100 may itself be responsible/configured for deciding whether it should act on the intention 110. For example, the controller 100 may be further configured to obtain an indication of a current charging level (e.g. state-of-charge, SoC) of the one or more battery packs 620, e.g. by one or more voltage measurements or based on a signal from a SoC-estimator, or similar. Based on the indicated charging level, the controller 100 may then decide whether the desired braking of the vehicle 600 can be performed by the electric machine 610 charging the one or more battery packs 620, or whether the one or more battery packs 620 are not capable of being charged (for whatever reason) and instead perform the braking by dissipating more power as heat, by causing the increase of core magnetization losses.

The one or more PWM signals 122 (or some other switching pattern) sent to the inverter 120 may be used to control for example a plurality of switching devices of the inverter 120, such as e.g. a plurality of insulated-gate bipolar-transistors (IGBTs), power MOSFETS, or similar, that are used by the inverter 120 to convert DC to AC power. For example, the inverter 120 may be configured for variable-frequency drive (VFD) of the electric machine 610, or similar.

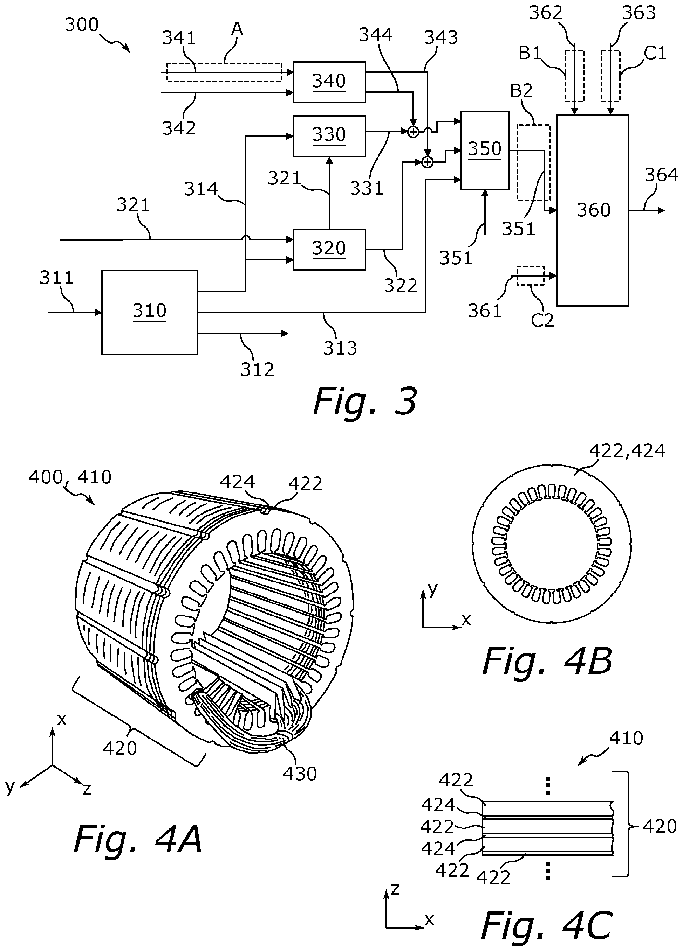

**FIG. 3** schematically illustrates a block-diagram of a control scheme 300 for the electric machine 610 (e.g., an induction motor), as may be implemented by the controller 100. The control scheme 300 may be a conventional one, but modified in accordance with the present disclosure to cause the increased core magnetization losses upon demand. A flux observer module 310 is responsible for providing, based on measured phase currents 311 (such as e.g. the feedback signal 126) an electric angle estimate 312 and a rotor current estimate 314. In addition, the module 310 may be further configured to convert the measured phase currents into a direct-quadrature (DQ) frame (or *synchronous* frame), e.g. as a signal/indication 313. A torque reference module 320 is responsible for receiving the rotor current estimate 314 and a torque reference 321, and to based thereon output a rotor flux reference 321 as well as a reactive (Q) current request 321. A rotor current control module 330 is responsible for providing, based on the rotor current estimate 314 and the rotor flux reference 321, an active (D) current request 331. A current control module 350 receives the active (D) and reactive (Q) current requests 331 and 321, respectively, and compares these against the measured currents 313 (also in the DQ-frame). Current requests may e.g. be for rotor and/or stator currents and similar of the electric machine. The module 350 also receives an indication of the electric angle 351 (e.g. as provided by the estimate 312), and outputs a voltage reference 351. A PWM (or switching pattern) generation module 360 receives the voltage reference 351, and uses a modulation scheme to generate a switching pattern 364, and the switching pattern 364 may then be used to e.g. switch the plurality of switching elements of the inverter 120. The control scheme as illustrated schematically in FIG. 3 may also be referred to as a scheme for flux-oriented torque (and current) control of the (induction) motor 610, or similar. However, the envisaged solution wherein the control scheme is altered to, on purpose, increase the core magnetization losses of the motor applies also to other types of control schemes.

To increase the core magnetization losses of the electric machine 610, the present disclosure envisages that the controller 100 is configured to modify the conventional scheme 300 in one or more ways. At least three possible ways of performing such modification/manipulation as envisaged herein will now be described in more detail.

As a first example alternative, "alternative A", it is envisaged that the controller 100 may be configured to use (as part of e.g. a (sub-) operation S222 of the method 200) a DC current offset 341, by adding one or more fundamental harmonics to the active and reactive current requests 331 and 321, respectively. For example, the scheme 300 may be modified by adding a module 340, that takes as input the DC current offset 341 and a signal 342 indicative of the electric angle (such as obtained from the estimate 312), and which decomposes the DC current offset 341 into a respective active and reactive request offset 344 and 343, respectively, that are then added to the respective active and reactive current requests 331 and 321, before providing these modified request to the current control module 350. In some examples, the module 340 may be configured to decompose the DC current offset 341 using Givens rotations, a (modified) Gram-Schmidt algorithm (MGS), or any other suitable algorithm for causing such a decomposition. Addition of DC components such as envisaged herein gives rise to hysteresis sub-loops in the core of the electric machine 610 that, in addition to eddy-current losses, increases the magnetization losses, as envisaged herein.

Core losses are often modelled using a power equation on the form

$$P_v = k \cdot f^\alpha \cdot \hat{B}^\beta, \qquad (1)$$

where $\hat{B}^\beta$ is peak induction (i.e. magnetic flux density) of a sinusoidal excitation with frequency $f$, $P_v$ is time-average power loss per unit volume, and $k$, $\alpha$ and $\beta$ are material parameters (that are often found experimentally). Equation (1) is often referred to as Steinmetz equation, named after Charles P. Steinmetz who proposed a similar equation (although without frequency dependence) in 1892. The core losses are due mainly to two effects, namely magnetic hysteresis and eddy currents, which consume energy from the source of the magnetic field and dissipates it as waste heat in the magnetic material. Equation (1) is derived based on an assumed sinusoidal magnetic field, and is often modified, to take into account also other non-sinusoidal flux waveforms, as

$$P_v = \frac{1}{T} \int_0^T k_i \left| \frac{dB}{dt} \right|^\alpha (\Delta B)^{\beta - \alpha} dt, \qquad (2)$$

where $\Delta B$ is peak-to-peak flux density, and where $k_i$ is given by

$$k_i = \frac{k}{(2\pi)^{\alpha - 1} \int_0^{2\pi} |\cos \theta|^\alpha 2^{\beta - \alpha} d\theta}.$$

Equation (2), that shares parameters $k$, $\alpha$ and $\beta$ with equation (1), is often referred to as the improved Generalized Steinmetz equation (iGSE).

None of equations (1) and (2) takes into account DC bias conditions (i.e., that the parameters used may vary under such conditions). It has, however, been experimentally verified that losses increase with DC bias (e.g. by introduction of hysteresis sub-loops that in addition to eddy-current losses further increases the overall losses), from which it is concluded that alternative **A** as envisaged herein increased the core magnetization losses as decided.

As a second example alternative, "alternative **B"**, it is envisaged that the controller 100 may be configured to insert (as part of e.g. a (sub-) operation S224 of the method 200) additional harmonic voltage components, for example in the modulation scheme itself (alternative B1 in FIG. 3, e.g. by an additional signal 362 provided to the switching pattern generation module 360 indicative of such harmonics insertion), and/or for example in the voltage reference 351 (alternative B2 in FIG. 3). From e.g. equations (1) or (2), it is deduced that by increasing higher-frequency content (by insertion of additional harmonics) in the electric machine 610, the core losses increases (reasonably assuming that $\alpha \geq 1$) and alternative *B* as envisaged herein thus also serves as one alternative for how to cause the desired increase of the core magnetization losses in the electric machine 610.

As a third alternative, "alternative **C"**, it is envisaged that the controller 100 may be configured to modify (as part of e.g. a (sub-) operation S226 of the method 200) the modulation scheme, for example by switching to a modulation scheme that increases the higher-frequency content, e.g. as indicated by a modulation scheme selection signal 362 provided to the module 360 (alternative B1 in FIG. 3), and/or e.g. increasing the higher-frequency content by reducing the corresponding carrier frequency (e.g. as indicated by a carrier frequency signal 361 provided to the module 360, alternative C2 in FIG. 3). For example, applying triangular re-magnetization with varying delay time, at least eddy-current losses are known to increase, also with frequency, and alternative C as envisaged herein thus also serves as one alternative for how to cause the desired increase of the core magnetization losses in the electric machine 610.

In general, it is further envisaged that each of the alternatives A, B and C may be combined, and that each alternative can be arbitrarily introduced in a conventional control system by modifying such a system as indicated in FIG. 3. In particular, the main torque control may remain active and controlling the machine, but the proposed modifications can serve to increase the core magnetization losses in order to improve the braking capabilities of the electric machine 610 and reduce the dependence on whether the one or more battery packs 620 are sufficiently depleted, thus also leading to improved safety as sufficient braking of the vehicle 600 may be allowed also when the one or more battery packs 620 are fully or almost fully charged, and by unloading at least some of the burden on e.g. service brakes of the vehicle 600.

The envisaged controller 100 and method 200 can be used with conventional electric machines, such as e.g. (asynchronous) induction motors. Envisaged herein is however also to provide an electric machine that is configured to, especially in combination with the envisaged controller and method) further enhance the desired effect by further increasing the core magnetization losses.

FIG. 4A schematically illustrates (in a perspective view) an example electric machine in form of an induction motor 400 as envisaged herein, showing (for the sake of clarity) only a stator 410 of the motor 400. The stator 400 is laminated, and includes a stack 420 of alternating laminations 422 and 424, wherein the laminations 422 are conducting (and may of e.g. steel), while the laminations 424 are insulating. For illustrative purposes, FIG. 4A also shows at least some stator windings 430 that are wound on the stator 410 as part of providing the motor 400. For example, if the motor 400 is a three-phase induction motor, there may be provided three separate groups of stator windings 430, one for each phase. The motor 400 of course also includes, although not illustrated, a rotor and all other components required to form a functioning induction motor.

FIG. 4B schematically illustrates (in a top-view) an example of laminations 422, 424.

FIG. 4C schematically illustrates (in a side-view) an example of the lamination stack 420, showing how the conductive and insulating laminations (discs or sheets) 422 and 424, respectively, are alternatively stacked on top of each other. As in a conventional stator for a conventional induction motor, the insulating discs 424 serve to reduce the presence of eddy-currents, as the currents are bound to exists only in between two adjacent insulating discs 424 and thus not allowed to extend e.g. all across a longitudinal direction of the stator 410. Conventionally, the insulating discs 424 are thus provided to reduce the core magnetization losses of the stator 410 and motor 400.

As envisaged herein, however, an (electrical) insulation material selected to form the insulating discs 424 is selected to have a conductivity that increases with frequency, such that the limiting of eddy-currents is intentionally made less effective at higher frequencies due to the resulting increased coupling between the (steel) discs 422. Phrased differently, the insulation material of the discs 424 is selected such that the core magnetization losses of the stator 410 and motor 400 intentionally increases with increasing frequency. As used herein, it is assumed that the insulation material is at least such that its conductivity increases with frequency within a frequency interval for which the electric machine is constructed for and operated in. This may thus help to make the motor 400 and stator 410 as envisaged herein more effective for braking the vehicle 600. In particular, it is envisaged that the motor 400 and stator 410 is to be combined with the controller 100 (and method 200) as envisaged herein, such that the effect of the increased higher-frequency content caused by the controller 100 due to modifying the control scheme (e.g. 300) is further enhanced by the frequency-dependent properties of the insulation material of the discs 424. Phrased differently, the envisaged electric machine such as the motor 400 thus has the effect of enhancing, or further enhancing if combined with the controller 100, the desired behavior of making the motor 400 more capable of braking the vehicle 600, and removing or at least somewhat reducing the dependence of such braking on whether the one or more battery packs 620 happen to be fully charged or not.

In other examples of the electric machine 400, it is envisaged to laminate, also or instead, the rotor using the insulation material with the frequency-dependent conductivity as described herein. Phrased differently, in the electric machine 400 such as envisaged here, the insulation material may be used to laminate the stator, the rotor, or both the rotor and stator.

In some examples, instead of an induction motor, the electric machine 400 may be e.g. a synchronous machine (e.g. a permanent magnet motor) or similar. Phrased differently, the envisaged solution wherein the insulation material with frequency-dependent conductivity is used to insulate different lamination sheets/discs is applicable also to other types of motors than induction motors, as it is envisaged that the desired effect of making the electric machine more suitable for braking of the vehicle 600 applies also to such other types of motors.

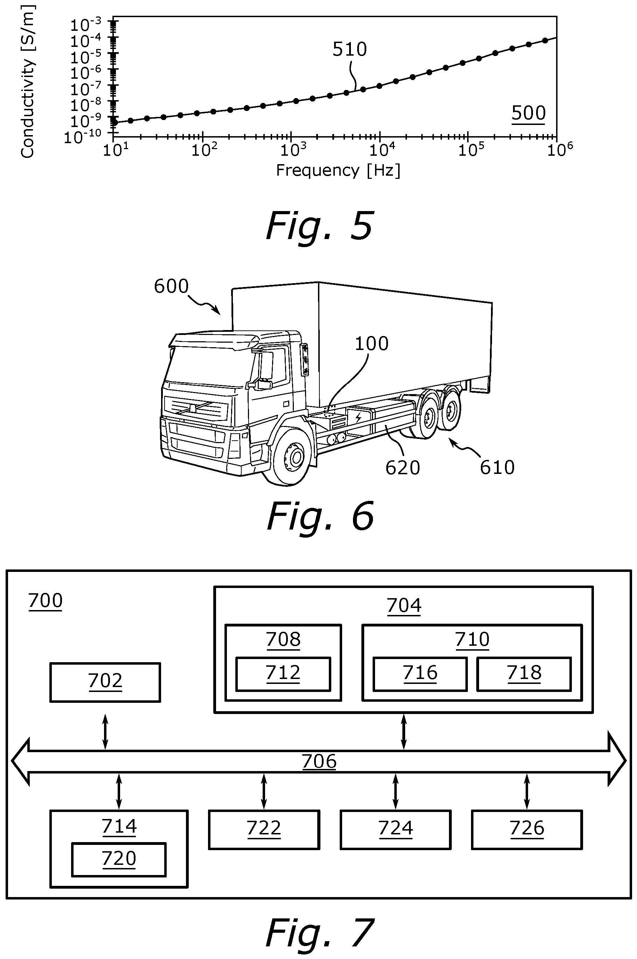

**FIG. 5** schematically illustrates a plot 500 of how conductivity can be made to depend on frequency as envisaged herein, in form of a curve 510 showing how the conductivity (measured in Sievert per meter, S/m) increases with increasing frequency (measured in Hertz, Hz). In this particular example, the insulation material is polyvinylidene fluoride (PVDF), which, in some examples, is envisaged to be used as (at least part of) the insulation material of the insulating discs 424. In another example, the insulation material instead (or in addition) includes polyimide (commercially often sold and marketed as "Kapton"), which has similar properties in terms of how its conductivity depends (increases) with frequency. As envisaged herein, the insulation material is however not limited only to PVDF and/or polyimide, and any suitable insulation material that has a conductivity that increases with frequency (and that also has other suitable properties, such as heat resistance and similar, for forming part of a stator lamination stack of an electric machine such as an induction motor). In yet another example, the insulation material instead (or in addition) includes graphene, such as e.g. three-dimensional graphene (e.g. flakes formed from multiple graphene layers). Graphene may for example be used to further enhance the desired properties of e.g. PVDF, polyimide, and similar, as envisaged herein.

**FIG. 6** schematically illustrates an example of the vehicle 600, here in form of an electric box-cargo truck. The truck 600 includes the electric machine 610 (e.g. the motor 400 and stator 410) and the one or more battery packs 620 as part of its electric propulsion system, and also the controller 100 as described herein for controlling the electric machine 610 such that its core magnetization losses increases intentionally when there is a desire to use the electric machine 610 to brake the truck 600. Although here illustrated in form of a truck, the vehicle as envisaged herein may of course be any type of fully or semi electric vehicle for which there is a need to use one or more of its electrical machines/motors to brake the vehicle, in order to e.g. unload some of the burden of the service brakes, and wherein safety may be enhanced by not making such (regenerative) braking as depending on whether the battery packs are fully charged or not. Examples include e.g. buses, haulers, dump trucks, wheel loaders, semitrailers, tractors, vehicle combinations (including e.g. tractor plus trailer, or tow truck and one or more trailers, and similar), etc. Generally, as envisaged herein, the vehicle can be any electric (heavy-duty) vehicle or piece of heavy machinery.

The controller 100 as envisaged herein may be constructed from passive components and non-programmable circuit elements. In other examples, the controller 100 may instead, or in addition, be implemented by one or more programmable components, e.g. by a computer system including processing circuitry. For example, the processing circuitry of such a computer system can be programmed to perform the method 200 as described earlier herein, to thus implement the envisaged control scheme for the electric machine. The processing circuitry may be configured to obtain the indication 110, and to control the electric machine 610 (either directly or via one or more intermediate entities 120, such as an inverter) such that the core magnetization losses are intentionally increased, at least when the indication 110 indicates that a braking of the vehicle using the electric machine is desirable, and/or at least when the controller 100 so decides, based on e.g. indicated SoC of the one or more battery packs 620 and similar as already described herein. Preferably, there is no intentional increase of core magnetization losses when e.g. the electric machine should not brake the vehicle, and/or if the electric machine could (instead) brake the vehicle by charging the one or more battery packs 620. When implemented by e.g. a computer system as envisaged herein, the method 200 is thus a computer-implemented method, and may be performed by the processing circuitry of the computer system.

**FIG. 7** is a schematic diagram of a computer system 700 for implementing examples disclosed herein, such as for implementing the controller 100. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software.

Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged herein:

Example 1: A controller for controlling an electric machine used to propel an electric vehicle, wherein the controller is configured to: obtain an indication of a desire to use the electric machine to brake the vehicle, and, in response to obtaining said indication, and as part of controlling the electric machine, intentionally increase core magnetization losses in the electric machine.

Example 2: The controller of example 1, wherein the controller is configured to increase the core magnetization losses by adding a direct current, DC, current offset to alternating current, AC, current requests used to control the electric machine.

Example 3: The controller of example 2, wherein the controller is configured to add the DC current offset after first decomposing the DC current offset into additional active and reactive components.

Example 4: The controller of example 2 or 3, wherein the AC current requests are for a stator and/or rotor current of the electric machine.

Example 5: The controller of any one of examples 1 to 4, wherein the controller is configured to increase the core magnetization losses by inserting one or more harmonic voltage components in at least one of a reference voltage and a modulation scheme for the electric machine.

Example 6: The controller of any one of the preceding examples, wherein the controller is configured to increase the core magnetization losses by modifying a modulation scheme for the electric machine, including at least one of reducing a carrier frequency for the modulation scheme and selecting another, different modulation scheme.

Example 7: The controller of any one of the preceding examples, wherein the controller is implemented by processing circuitry of a computer system.

Example 8: An electric machine for propelling an electric vehicle, wherein the electric machine includes a laminated stator and/or rotor, and wherein an insulation material provided between the laminations of the stator and/or rotor is selected to have a conductivity that increases with frequency.

Example 9: The electric machine of example 8, wherein the electric machine is an induction motor.

Example 10: The electric machine of example 8, wherein the electric machine is a synchronous electric machine.

Example 11: The electric machine of example 10, wherein the electric machine is of a permanent magnet motor-type.

Example 12: The electric machine of any one of examples 8 to 11, wherein the insulation material is or includes polyvinylidene fluoride, PVDF.

Example 13: The electric machine of any one of examples 8 to 12, wherein the insulation material is or includes polyimide.

Example 14: The electric machine of any one of examples 8 to 13, wherein the insulation material includes graphene.

Example 15: An electric vehicle, including: the controller of any one of examples 1 to 7, and the electric machine for propelling the vehicle.

Example 16: The vehicle of example 15, wherein the vehicle is a heavy-duty vehicle or a piece of heavy machinery.

Example 17: The vehicle of example 15 or 16, wherein the electric machine is (or has the properties of) the electric machine of any one of examples 8 to 14.

Example 18: A computer-implemented method for controlling an electric machine used to propel and/or brake an electric vehicle, wherein the method is performed by processing circuitry of a computer system, and wherein the method includes: obtaining an indication of a desire to use the electric machine to brake the vehicle, and, in response to obtaining said indication, and as part of controlling the electric machine, intentionally increasing core magnetization losses in the electric machine.

Example 19: A computer program product including program code for performing, when executed by the processing circuitry, the method of example 18.

Example 20: A non-transitory computer-readable storage medium including instructions which, when executed by the processing circuitry, cause the processing circuitry to perform the method of example 18.

## Claims

1. A controller (100) for controlling an electric machine (610) used to propel and/or brake an electric vehicle (600), wherein the controller is configured to:

   - obtain an indication (110) of a desire to use the electric machine to brake the vehicle;
   - in response to obtaining said indication, and as part of controlling the electric machine, intentionally increase core magnetization losses in the electric machine.

2. The controller of claim 1, wherein the controller is configured to increase the core magnetization losses by adding a direct current, DC, current offset to alternating current, AC, current requests used to control the electric machine.

3. The controller of claim 2, wherein the controller is configured to add the DC current offset after first decomposing the DC current offset into additional active and reactive components.

4. The controller of any one of claims 1 to 3, wherein the controller is configured to increase the core magnetization losses by inserting one or more harmonic voltage components in at least one of a reference voltage and a modulation scheme for the electric machine.

5. The controller of any one of the preceding claims, wherein the controller is configured to increase the core magnetization losses by modifying a modulation scheme for the electric machine, comprising at least one of reducing a carrier frequency for the modulation scheme and selecting another, different modulation scheme.

6. An electric machine (400, 610) for propelling and/or braking an electric vehicle (600), wherein the electric machine comprises a laminated stator (410) and/or rotor, and wherein an insulation material (424) provided between the laminations (422) of the stator and/or rotor is selected to have a conductivity that increases with frequency.

7. The electric machine of claim 6, wherein the electric machine is an induction motor.

8. The electric machine of claim 6 or 7, wherein the insulation material is or includes polyvinylidene fluoride, PVDF.

9. The electric machine of any one of claims 6 to 8, wherein the insulation material is or includes polyimide.

10. The electric machine of any one of claims 6 to 9, wherein the insulation material includes graphene.

11. An electric vehicle (600), comprising:

    - the controller (100) of any one of claims 1 to 5, and

- the electric machine (610) for propelling the vehicle.

12. The vehicle of claim 11, wherein the electric machine is the electric machine (400) of any one of claims 6 to 10.

13. A computer-implemented (200) method for controlling an electric machine used to propel and/or brake an electric vehicle, wherein the method is performed by processing circuitry of a computer system, and wherein the method comprises:

- obtaining (S210) an indication of a desire to use the electric machine to brake the vehicle, and
- in response to obtaining said indication, and as part of controlling the electric machine, intentionally increasing (S220) core magnetization losses in the electric machine.

14. A computer program product comprising program code for performing, when executed by the processing circuitry, the method of claim 13.

15. A non-transitory computer-readable storage medium comprising instructions which, when executed by the processing circuitry, cause the processing circuitry to perform the method of claim 13.

**Amended claims in accordance with Rule 137(2) EPC.**

1. An assembly for propelling and/or braking an electric vehicle (600), wherein the assembly comprises a controller (100) and an electric machine (610),

wherein the controller is configured to:

- obtain an indication (110) of a desire to use the electric machine to brake the vehicle, and
- in response to obtaining said indication, and as part of controlling the electric machine, intentionally increase core magnetization losses in the electric machine;

and wherein the electric machine (400, 610) comprises a stator (410) and/or rotor including a plurality of alternately stacked electrically conductive discs or sheets (422) and insulating discs or sheets (424), and wherein an insulation material of the insulating discs or sheets is selected to have an electrical conductivity that increases with frequency.

2. The assembly of claim 1, wherein the controller is configured to increase the core magnetization losses by adding a direct current, DC, current offset to alternating current, AC, current requests used to control the electric machine.

3. The assembly of claim 2, wherein the controller is configured to add the DC current offset after first decomposing the DC current offset into additional active and reactive components.

4. The assembly of any one of claims 1 to 3, wherein the controller is configured to increase the core magnetization losses by inserting one or more harmonic voltage components in at least one of a reference voltage and a modulation scheme for the electric machine.

5. The assembly of any one of the preceding claims, wherein the controller is configured to increase the core magnetization losses by modifying a modulation scheme for the electric machine, comprising at least one of reducing a carrier frequency for the modulation scheme and selecting another, different modulation scheme.

6. The assembly of any one of the preceding claims, wherein the electric machine is an induction motor.

7. The assembly of any one of the preceding claims, wherein the insulation material is or includes polyvinylidene fluoride, PVDF.

8. The assembly of any one of the preceding claims, wherein the insulation material is or includes polyimide.

9. The assembly of any one of the preceding claims, wherein the insulation material includes graphene.

10. An electric vehicle (600), comprising the assembly of any one of claims 1 to 9.

Fig. 1A

Fig. 1B

Fig. 2

Fig. 3

Fig. 4A

Fig. 4B

Fig. 4C

Fig. 5

Fig. 6

Fig. 7

Europäisches
Patentamt
European
Patent Office
Office européen
des brevets

# EUROPEAN SEARCH REPORT

**Application Number**

EP 24 21 9861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2023 127419 A1 (GM GLOBAL TECH OPERATIONS LLC [US]) 17 October 2024 (2024-10-17) | 1,3,5, 11-13 | INV. H02P3/22 H02P21/36 |
| Y | * paragraphs [0001], [0041], [0102]; figure 7A * | 2,4, 6-10,14, 15 | |
| Y | EP 1 077 527 B1 (HOLTZ JOACHIM PROF DR ING [DE]; WEG AUTOMACAO LTDA [BR]) 29 May 2002 (2002-05-29) * paragraph [0014] * | 2 | |
| Y | US 2022/407439 A1 (LAMB JACOB [US] ET AL) 22 December 2022 (2022-12-22) * claim 20; figure 5 * | 4,7,14, 15 | |
| Y | JP 2006 166679 A (NISSAN MOTOR) 22 June 2006 (2006-06-22) * paragraph [0008] * | 6,9 | |
| Y | CN 110 951 195 A (UNIV HARBIN SCIENCE & TECH) 3 April 2020 (2020-04-03) * figure 9 * | 8 | TECHNICAL FIELDS SEARCHED (IPC) H02P |
| Y | CN 206 790 238 U (ZHANG XIAN) 22 December 2017 (2017-12-22) * figure 2 * | 10 | |

The present search report has been drawn up for all claims

| Place of search | Date of completion of the search | Examiner |
|---|---|---|
| Munich | 13 May 2025 | Schneider, Gernot |

EPO FORM 1503 03.82 (P04C01)

## ANNEX TO THE EUROPEAN SEARCH REPORT
## ON EUROPEAN PATENT APPLICATION NO.

EP 24 21 9861

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | | Publication date | Patent family member(s) | | Publication date |
|---|---|---|---|---|---|
| DE 102023127419 A1 | | 17-10-2024 | CN | 118801746 A | 18-10-2024 |
| | | | DE | 102023127419 A1 | 17-10-2024 |
| | | | US | 2024348185 A1 | 17-10-2024 |
| EP 1077527 | B1 | 29-05-2002 | AT | E218253 T1 | 15-06-2002 |
| | | | BR | 0003903 A | 12-06-2001 |
| | | | CN | 1285652 A | 28-02-2001 |
| | | | DE | 69901609 T2 | 21-11-2002 |
| | | | EP | 1077527 A1 | 21-02-2001 |
| | | | US | 6326762 B1 | 04-12-2001 |
| US 2022407439 | A1 | 22-12-2022 | NONE | | |
| JP 2006166679 | A | 22-06-2006 | JP | 2006166679 A | 22-06-2006 |
| | | | US | 2006145562 A1 | 06-07-2006 |
| CN 110951195 | A | 03-04-2020 | NONE | | |
| CN 206790238 | U | 22-12-2017 | NONE | | |

EPO FORM P0459

For more details about this annex : see Official Journal of the European Patent Office, No. 12/82